# EUROPÄISCHE PATENTSCHRIFT

(11) **EP 3 960 540 B1**
(45) Veröffentlichungstag und Bekanntmachung des Hinweises auf die Patenterteilung: **21.02.2024**
(21) Anmeldenummer: 21193319.7
(22) Anmeldetag: 26.08.2021
(51) Int. Cl.: B60P 7/10

(54) **SEITENFÜHRUNGSADAPTER, SEITENFÜHRUNGSSYSTEM, FRACHTDECK UND VERAHREN ZUM UMRÜSTEN EINES FRACHTDECKS**
SIDE GUIDE ADAPTER, SIDE GUIDE SYSTEM, CARGO DECK AND METHOD OF RETROFITTING A CARGO DECK
ADAPTATEUR DE GUIDAGE LATÉRAL, SYSTÈME DE GUIDAGE LATÉRAL, PONT À FRET ET PROCÉDÉ DE TRANSFORMATION D'UN PONT À FRET

(30) Priorität: 28.08.2020 DE 102020122577; 02.09.2020 DE 102020122963
(43) Veröffentlichungstag der Anmeldung: 02.03.2022
(73) Patentinhaber: Telair International GmbH, 83714 Miesbach (DE)
(72) Erfinder: Patzlsperger, Andreas, 83666 Waakirchen (DE); Utsch, Raimo, 83569 Vogtareuth (DE)
(74) Vertreter: Meissner Bolte Partnerschaft mbB

(56) Entgegenhaltungen:
- WO-A1-02/100718
- DE-A1-102010 060 467
- GB-A- 2 436 715

## Beschreibung

Die Erfindung betrifft einen Seitenführungsadapter zum Führen und/oder Halten von Frachtstücken, ein Seitenführungssystem mit einem solchen Seitenführungsadapter, ein Frachtdeck, das mit einem Seitenführungsadapter oder einem Seitenführungssystem ausgestattet ist, und ein Verfahren zum Umrüsten eines Frachtdecks.

Es ist bekannt, dass Laderäume von Flugzeugen für unterschiedliche Verwendungszwecke häufig umgebaut werden. Beispielsweise kann es notwendig sein, ein Frachtdeck in Abhängigkeit von den zu ladenden Frachtstücken zu konfigurieren. Bei dem Transport von Ladung in Flugzeugen werden häufig Frachtstücke, z.B. Container oder Paletten, mit genormten Abmessungen verwendet. So gibt es für Container, beispielsweise für die zivile Luftfahrt, folgende Normgrößen: 123,5 auf 317,5 cm (88 Zoll × 125 Zoll), 143,8 cm auf 317,5 cm (96 Zoll × 125 Zoll), 223,5 cm auf 157,5 cm (88 Zoll × 62 Zoll). Im militärischen Bereich werden häufig Paletten mit einer Abmessung von 274,3 cm auf 223,5 cm (108 Zoll × 88 Zoll) verwendet.

Zum Halten und Führen derartiger Frachtstücke werden auf dem Frachtdeck montierte Seitenführungen verwendet, die in Längsrichtung des Frachtdecks im Bereich jeweils einer Seitenwand des Flugzeugs verlaufen.

Für die optimale Ausnutzung eines Frachtdecks ist es notwendig, eine Vielzahl von Konfigurationsmöglichkeiten anzubieten, wobei ein schnelles Umrüsten des Frachtdecks eine hohe Priorität genießt. Da unterschiedliche Frachtstücke oftmals unterschiedliche Abmessungen aufweisen, kann es sein, dass zwischen einem Frachtstück und der jeweiligen Seitenführung ein Spalt bzw. Abstand vorhanden ist. Beispielsweise kann dies bei der Konfiguration des Frachtdecks zum Transport von militärischen Paletten auftreten.

Um derartige Frachtstücke sicher zu führen bzw. zu halten, können Adapter zum Einsatz kommen, die den seitlichen Abstand zwischen dem Frachtstück und der Seitenführung überbrücken.

Aus der DE 10 2010 024 330 A1 ist beispielsweise eine Luftfrachtpalette bekannt, die zur seitlichen Überbrückung eines Spalts zusätzliche Adapterschienen aufweist. Die Adapterschienen sind dabei an der Palette angeordnet und bilden eine Verlängerung der Palette zur Seitenführung hin. Bei der Luftfrachtpalette gemäß DE 10 2010 024 330 A1 ist nachteilig, dass diese kein standardisiertes Frachtstück zum Transport in Flugzeugen bildet und somit von Normabmessungen abweicht. Des Weiteren erfordern die Adapterschienen einen erhöhten Platzbedarf zur Aufbewahrung im Frachtdeck.

In der DE 41 02 274 C1 ist eine Seitenführungsvorrichtung beschrieben, die an zwei voneinander beabstandeten Sitzschienen angeordnet ist, wobei ein Riegelhaken der Seitenführungsvorrichtung zum Frachtstück hin verschiebbar ist und das Frachtstück dadurch seitlich gehalten wird. Hier ist allerdings nachteilhaft, dass ein Umrüsten des Frachtdecks lediglich mit hohem Aufwand durchführbar ist. Des Weiteren weist ein Frachtdeck mit derartigen Seitenführungsvorrichtungen ein hohes Gesamtgewicht auf.

Weitere Beispiele wurden in DE102010060467, WO02100718 oder GB2436715 offenbart.

Geeignete Vorrichtungen zur Überbrückung eines Seitenabstands müssen schnell und einfach anbringbar sein, da die Kosten für das Betreiben von entsprechenden Flugzeugen sehr hoch sind. Des Weiteren soll die Konfiguration bzw. Umrüstung des Frachtdecks sehr einfach durchführbar sein. Hinzu kommt, dass die Ausstattung des Frachtdecks, insbesondere die Adapter robust sein müssen, da diese hohen Lasten ausgesetzt sind und eine schonende Behandlung aufgrund des hohen Zeitdrucks beim Be- und Entladen nicht gefordert werden kann. Ein Frachtdeck mit entsprechenden Adaptern ist häufig der Nässe, hohen Temperaturunterschieden, Staub und anderen rohen Einflüssen ausgesetzt. Ein defektes Frachtdeck - auch bereits ein defektes Funktionselement des Frachtdecks - kann dazu führen, dass das entsprechende Flugzeug für mehrere Tage nicht eingesetzt werden kann. Ein derartiger Ausfall hat hohe Kosten zur Folge.

Der Erfindung liegt daher die Aufgabe zu Grunde, einen Seitenführungsadapter anzugeben, der die Anpassung eines Frachtdecks an Frachtstücke mit unterschiedlichen Abmessungen erleichtert, einfach in der Handhabung ist und Frachtstücke sicher hält. Der Erfindung liegt ferner die Aufgabe zu Grunde ein Seitenführungssystem, ein Frachtdeck und eine Verfahren zum Umrüsten eines Frachtdecks anzugeben.

Erfindungsgemäß wird diese Aufgabe im Hinblick auf den Seitenführungsadapter durch den Gegenstand des Anspruchs 1 gelöst. Hinsichtlich des Seitenführungssystems, des Frachtdecks und des Verfahrens zum Umrüsten wird die vorstehend genannte Aufgabe jeweils durch den Gegenstand des Anspruchs 2 (System), des Anspruchs 13 (Frachtdeck) und des Anspruchs 15 (Verfahren) gelöst. Vorteilhafte Ausgestaltungen ergeben sich anhand der Unteransprüche.

Konkret wird die Aufgabe durch einen Seitenführungsadapter zum Führen und/oder Halten eines Frachtstücks, insbesondere einer Palette, in einem Flugzeug, gelöst, wobei der Seitenführungsadapter Folgendes umfasst:
- mindestens ein Befestigungselement zur Befestigung an einem Lochschienenabschnitt, einer Seitenführung;
- mindestens ein Distanzelement zum Überbrücken eines Abstands zu dem Frachtstück, wobei das Distanzelement und das Befestigungselement gelenkig miteinander verbunden sind; und
- mindestens einen Halteabschnitt für das Frachtstück, der an einer Stirnseite des Distanzelements angeordnet ist und mindestens eine Haltekontur zum Führen und/oder Halten des Frachtstücks aufweist,
wobei die Haltekontur im Gebrauch den Seitenführungsadapter mit dem Frachtstück zumindest teilweise formschlüssig verbindet.

Mit anderen Worten ist der Seitenführungsadapter dazu ausgebildet, beim Einbringen eines Frachtstücks in den Laderaum eines Frachtdecks eines Flugzeugs das Frachtstück zu führen und im eingebrachten Zustand, d.h. an der Endposition, das Frachtstück zu halten. Der Seitenführungsadapter übernimmt somit eine Führung- und Haltefunktion.

Bevorzugt ist das Frachtstück eine Palette, die im militärischen Bereich zum Einsatz kommt. Derartige Paletten weisen Führungselemente auf, die seitlich an den Paletten angeordnet sind. Eine Palette mit Führungselementen ist beispielsweise aus der eingangs genannten DE 10 2010 024 330 A1 bekannt.

Ein wesentlicher Gedanke der vorliegenden Erfindung besteht darin, dass der Seitenführungsadapter eine Klappfunktion umfasst, die eine schnelle und einfache Umrüstung des Frachtdecks ermöglicht. Dazu weist der Seitenführungsadapter ein Befestigungselement und ein Distanzelement auf, die über ein Gelenk miteinander verbunden sind. Über die gelenkige Verbindung des Befestigungselements und des Distanzelements ist der Seitenführungsadapter klappbar ausgebildet. Mit anderen Worten sind das Befestigungselement und das Distanzelement relativ zueinander und/oder voneinander verschwenkbar. Dies hat den Vorteil, dass der Seitenführungsadapter bei der Montage über das Befestigungselement schnell und einfach an dem Schienenabschnitt befestigt und anschließend das Distanzelement in seine Halte- und Führungsposition abgeklappt werden kann.

Im eingeklappten Zustand weist der Seitenführungsadapter eine kompakte Bauform auf, sodass dieser platzsparend im Frachtdeck aufbewahrt werden kann. Unter dem eingeklappten Zustand des Seitenführungsadapters ist zu verstehen, dass das Befestigungselement und das Distanzelement im Wesentlichen in einer gemeinsamen Ebene liegend ausgerichtet sind.

Während des Einsatzes befindet sich der Seitenführungsadapter im ausgeklappten Zustand, wobei das Befestigungselement an einem Schienenabschnitt befestigt ist und das Distanzelement einen Abstand zwischen einer Seitenführung und einem Frachtstück überbrückt.

Unter der Seitenführung ist eine Einrichtung zu verstehen, die dazu ausgebildet ist, Frachtstücke in Längsrichtung (X-Achse) des Flugzeugs (von Bug zu Heck, oder von Heck zu Bug) zu leiten. Während des Fluges nimmt die Seitenführung Kräfte quer zur Längsrichtung (Y-Achse) auf und hält die Frachtstücke in ihrer Position. Bevorzugt greifen Führungsrollen von unten an die Frachtstücke an und stützen diese ab. Sie ermöglichen einen einfachen und mit geringer Reibung behafteten Transport der Frachtstücke innerhalb des Frachtraums.

Das Distanzelement bildet einen Abstandshalter zur Überbrückung des Abstands zwischen der Seitenführung und dem Frachtstück. Das Distanzelement begrenzt das Frachtstück seitlich. Dadurch wird eine Seitwärtsbewegung des Frachtstücks, beispielsweise während eines Fluges oder der Be-und Entladung verhindert. Besonders bevorzugt nimmt das Distanzelement die auftretenden Kräfte in Querrichtung des Flugzeugs (Y-Achse) von dem zugeordneten Frachtstück auf und überträgt diese an die Seitenführung.

Im Gebrauch nimmt der Seitenführungsadapter Kräfte quer zur Längsrichtung (Y-Achse) des Flugzeugs auf und überträgt diese an die Seitenführung. Das Distanzelement ist somit zur Kraftübertragung quer zur Längsrichtung ausgebildet. Vorzugsweise kann der Seitenführungsadapter zusätzlich Kräfte in Längsrichtung (X-Achse) des Flugzeugs aufnehmen. Die bei einem Flug auftretenden Kräfte in Vertikalrichtung (Z-Achse) des Flugzeugs werden vorzugsweise mittels zusätzlicher Riegelvorrichtungen aufgenommen.

Unter dem ausgeklappten Zustand des Seitenführungsadapters ist zu verstehen, dass das Befestigungselement und Distanzelement jeweils in einer unterschiedlichen Ebene angeordnet sind. Die beiden Ebenen sind vorzugsweise in einer Vertikalrichtung des Flugzeugs (Z-Richtung) voneinander beabstandet. Im Gebrauch ist das Befestigungselement in einer ersten Ebene im Bereich des Schienenabschnitts angeordnet und das Distanzelement in einer zweiten Ebene im Bereich einer Ladeebene des Frachtdecks angeordnet. Vorzugsweise ist das Befestigungselement oberhalb des Distanzelements angeordnet. Mit anderen Worten ist die erste Ebene bevorzugt oberhalb der zweiten Ebene angeordnet.

Der Seitenführungsadapter weist zusätzlich einen Halteabschnitt mit einer Haltekontur auf, die das jeweils zugeordnete Frachtstück führt und hält. Der Halteabschnitt und somit die Haltekontur sind an der Stirnseite des Distanzelements angeordnet. Mit anderen Worten ist der Halteabschnitt an dem Distanzelement angeordnet derart, dass die Haltekontur dem Frachtstück zum Führen und Halten zugewandt ist. Die Haltekontur ist derart ausgebildet, dass im Einsatz eine zumindest abschnittsweise formschlüssige Verbindung mit einem Frachtstück ermöglicht wird. Durch die Haltekontur erfolgt eine verbesserte Führung des Frachtstücks, sodass besonders eine Be- und Entladung erleichtert wird.

Die Stirnseite des Distanzelements bildet jene Seite des Distanzelements, die im ausgeklappten Zustand des Seitenführungsadapters sowie im Gebrauch dem Frachtstück zugewandt ist.

Ein weiterer Aspekt der Erfindung betrifft ein Seitenführungssystem mit einer Seitenführung, die mindestens einen Schienenabschnitt, und mindestens eine Anschlagfläche aufweist, und mindestens einem Seitenführungsadapter, insbesondere einen erfindungsgemäßen Seitenführungsadapter, wobei im ausgeklappten Zustand ein Befestigungselement des Seitenführungsadapters an dem Schienenabschnitt befestigt ist und ein Distanzelement des Seitenführungsadapters an die Anschlagfläche der Seitenführung anschlägt.

Die Anschlagfläche der Seitenführung dient zum Einleiten von quer zur Längsrichtung auftretenden Kräften von dem Distanzelement in die Seitenführung. Das Distanzelement schlägt dazu an der Anschlagfläche an.

Dies hat den Vorteil, dass durch die Anlage des Distanzelements an der Anschlagfläche der Seitenführung die bei einem Flug oder einer Be-und Entladung des Frachtraums auftretenden Kräfte in Querrichtung des Frachtdecks von dem Frachtstück in die Seitenführung eingeleitet und somit durch die Struktur des Flugzeugs aufgenommen werden. Das jeweilige Frachtstück wird dadurch verbessert gehalten. Der Seitenführungsadapter erfüllt somit neben der Führung- und Haltefunktion zusätzlich eine Kraftübertragungsfunktion.

Der Schienenabschnitt erstreckt sich vorzugsweise in Längsrichtung des Frachtdecks. Bevorzugt ist der Schienenabschnitt durch einen Lochschienenabschnitt gebildet. Der Lochschienenabschnitt kann mindestens zwei Löcher zur Befestigung des Befestigungselements aufweisen. Vorzugsweise greift das Befestigungselement zum Befestigen des Seitenführungsadapters in den Schienenabschnitt, insbesondere den Lochschienenabschnitt ein.

Das erfindungsgemäße Seitenführungssystem kann alternativ oder zusätzlich einzelne oder eine Kombination mehrerer zuvor in Bezug auf den Seitenführungsadapter genannter Merkmale aufweisen.

Bevorzugt sind der erfindungsgemäße Seitenführungsadapter bzw. das erfindungsgemäße Seitenführungssystem für den Einsatz in einem unteren Deckbereich ("Lower Deck") eines Flugzeugs ausgebildet. Der Einsatzbereich ist nicht auf den vorgenannten eingeschränkt.

Die nachfolgend beschriebenen Ausführungsformen betreffen vorteilhafte Ausgestaltungen des erfindungsgemäßen Seitenführungsadapters und/oder des erfindungsgemäßen Seitenführungssystems.

Bei einer bevorzugten Ausführungsform ist das Distanzelement und/oder das Befestigungselement um mindestens eine Gelenkachse drehbar gelagert. Die Gelenkachse verläuft vorzugsweise parallel zur Stirnseite des Distanzelements. Dies hat den Vorteil, dass bei einer Montage an der Seitenführung das Distanzelement mit seiner Stirnseite seitlich, insbesondere in Y-Richtung, abklappbar ist. Dies vereinfacht die Montage erheblich, wodurch ein Umrüstaufwand des Frachtdecks verringert wird.

Bei einer weiteren bevorzugten Ausführungsform ist das Befestigungselement um eine erste Gelenkachse drehbar gelagert. Zusätzlich oder alternativ ist das Distanzelement bevorzugt um eine zweite Gelenkachse drehbar gelagert. Mit anderen Worten sind das Distanzelement und das Befestigungselement jeweils um eine separate Gelenkachse drehbar gelagert. Die beiden Gelenkachsen sind voneinander beabstandet. Das Distanzelement und das Befestigungselement sind hier durch ein Doppelgelenk miteinander verbunden. Mit anderen Worten sind das Distanzelement und das Befestigungselement miteinander doppelgelenkig verbunden. Die beiden Gelenkachsen sind vorzugsweise parallel ausgerichtet.

Durch die doppelgelenkige Verbindung der beiden Elemente wird bei der Montage eine Ausrichtung des Befestigungselements sowie des Distanzelements auf unterschiedlichen Ebenen ermöglicht. Konkret kann dadurch ein Höhenversatz, insbesondere in Vertikalrichtung (Z-Achse) des Flugzeugs, zwischen einem Befestigungspunkt des Befestigungselements und einer Ladeebene des Frachtdecks ausgeglichen werden.

Alternativ ist es möglich, dass das Befestigungselement und das Distanzelement um eine einzelne, gemeinsame Gelenkachse drehbar gelagert sind.

Bevorzugt umfasst der Seitenführungsadapter mindestens einen Verbinder, der die mindestens eine Gelenkachse aufweist und das Distanzelement mit dem Befestigungselement gelenkig verbindet. Besonders bevorzugt sind die erste Gelenkachse und die zweite Gelenkachse Teil des Verbinders. Der Verbinder verbindet das Befestigungselement mit dem Distanzelement. Der Verbinder erstreckt sich vorzugsweise zwischen dem Distanzelement und dem Befestigungselement. Der Verbinder erstreckt sich quer zur Stirnseite des Distanzelements. Mit anderen Worten ist der Verbinder quer zur Stirnseite des Distanzelements angeordnet. Der Verbinder bildet vorzugsweise einen Quersteg zwischen dem Distanzelement und dem Befestigungselement. Die beiden Gelenkachsen sind vorzugsweise an jeweils einem Längsende des Verbinders angeordnet.

Im ausgeklappten Zustand erstreckt sich der Verbinder zwischen zwei höhenversetzten Ebenen, in denen jeweils eines der beiden Elemente angeordnet ist. Im eingeklappten Zustand liegt der Verbinder im Wesentlichen mit dem Befestigungselement und dem Distanzelement in einer gemeinsamen Ebene. Dies ermöglicht eine platzsparende Aufbewahrung des Seitenführungsadapters im Frachtdeck.

Bei einer besonders bevorzugten Ausführungsform weist das Distanzelement mindestens eine Aufnahmeöffnung auf, in die das Befestigungselement und/oder der Verbinder zum Verstauen einschwenkbar ist. Mit anderen Worten können das Befestigungselement und der Verbinder in die Aufnahmeöffnung einschwenkbar sein. Alternativ kann der Verbinder zumindest abschnittsweise in die Aufnahmeöffnung einschwenkbar sein. Die Aufnahmeöffnung dient zur Aufnahme des Befestigungselements bzw. des Verbinders, um den eingeklappten Zustand des Seitenführungsadapters zu ermöglichen. Durch die Aufnahmeöffnung wird eine besonders kompakte Form des Seitenführungsadapters im eingeklappten Zustand realisiert. Dadurch wird der Platzbedarf für die Aufbewahrung des Seitenführungsadapters reduziert.

Durch die Aufnahmeöffnung kann das Befestigungselement und/oder der Verbinder im Distanzelement im eingeklappten Zustand versenkt angeordnet sein. Es ist möglich, dass die mindestens eine Gelenkachse bzw. mindestens eine der beiden Gelenkachsen in der Aufnahmeöffnung angeordnet ist.

Das Distanzelement kann mindestens eine Auflagefläche aufweisen, die die Aufnahmeöffnung zumindest teilweise begrenzt, sodass im eingeschwenkten Zustand der Verbinder und/oder das Befestigungselement an der Auflagefläche aufliegen. Der eingeschwenkte Zustand entspricht dem eingeklappten Zustand des Seitenführungsadapters. Befindet sich der Adapter im eingeklappten Zustand, können der Verbinder und das Befestigungselement an der Auflagefläche aufliegen. Alternativ ist es möglich, dass im eingeklappten Zustand der Verbinder oder das Befestigungselement an der Auflagefläche aufliegt.

Die Aufnahmeöffnung bildet bevorzugt einen freien Durchgang, der durch die mindestens eine Auflagefläche zumindest abschnittsweise begrenzt ist. Dadurch wird eine Gewichtsreduzierung des Seitenführungsadapters erreicht. Es ist alternativ denkbar, dass die Aufnahmeöffnung durch eine Ausnehmung im Distanzelement gebildet ist, die bodenseitig vollständig geschlossen ist.

Vorzugsweise weist das Distanzelement mindestens eine Oberfläche auf, mit der das Befestigungselement im eingeschwenkten Zustand zumindest bündig abschließt. Mit anderen Worten ist das Befestigungselement im eingeklappten Zustand im Distanzelement vollständig versenkt. Im eingeklappten Zustand weist somit der Seitenführungsadapter eine besonders platzsparende Bauform auf.

Die Oberfläche des Distanzelements erstreckt sich bevorzugt im Wesentlichen quer zur Stirnseite des Distanzelements. Im Gebrauch bzw. im ausgeklappten Zustand des Seitenführungsadapters ist die Oberfläche in Vertikalrichtung (Z-Achse) des Flugzeugs obenliegend angeordnet. Die Oberfläche schließt vorzugsweise die Aufnahmeöffnung zur Aufnahme des Befestigungselements und/oder des Verbinders zumindest teilweise ein.

Besonders bevorzugt ist das Distanzelement plattenförmig ausgebildet. Mit anderen Worten bildet das Distanzelement eine Abstandsplatte. Das Distanzelement weist mindestens eine Längserstreckung und mindestens eine Quererstreckung auf, wobei bevorzugt die Stirnseite an einer der Längserstreckungen ausgebildet ist. Bevorzugt ist das Distanzelement quaderförmig ausgebildet. Das Distanzelement umfasst somit eine weitere Seite, die der Stirnseite gegenüber angeordnet ist. Die weitere Seite bildet eine Anschlagseite des Distanzelements, die im ausgeklappten Zustand mit der Anschlagfläche der Seitenführung des erfindungsgemäßen Seitenführungssystems zusammenwirkt. Konkret liegt die Anschlagseite des Distanzelements im eingebauten und ausgeklappten Zustand an der Anschlagfläche der Seitenführung direkt an, um auftretende Querkräfte auf die Seitenführung zu übertragen. Durch die plattenförmige Ausbildung des Distanzelements kann der Seitenführungsadapter im eingeklappten Zustand möglichst kompakt in einer flachen Ebene des Frachtdecks angeordnet werden. Bevorzugt wird der Seitenführungsadapter hierfür unterhalb der Ladeebene des Frachtdecks angeordnet.

Das Befestigungselement und/oder der Verbinder können zusätzlich oder alternativ ebenfalls plattenförmig ausgebildet sein.

Bei einer bevorzugten Ausführungsform weist eine/die Haltekontur zwei gegenüber angeordnete Haltenasen auf, die vom Distanzelement abstehend ausgebildet und zur Aufnahme des Frachtstücks voneinander beabstandet sind. Mit anderen Worten ist die Haltekontur U-förmig ausgebildet. Durch die Haltekontur bzw. die Haltenasen wird eine zumindest teilweise formschlüssige Verbindung des Seitenführungsadapters mit dem Frachtstück ermöglicht, wodurch ein Führen bzw. Halten des Frachtstücks im Gebrauch des Seitenführungsadapters gewährleistet wird.

Die beiden Haltenasen schließen bevorzugt einen dazwischenliegenden Freiraum ein, der zur zumindest teilweisen Aufnahme eines Frachtstücks ausgebildet ist. Mit anderen Worten ist die Haltekontur vorzugsweise derart ausgebildet, dass diese in einer von der Stirnseite abgewandten Richtung offen ausgebildet ist. Die beiden Haltenasen bilden im Gebrauch für das Frachtstück eine in Vertikalrichtung (Z-Achse) des Flugzeugs obere bzw. untere Begrenzung. Die Haltenasen können derart ausgebildet sein, dass zwischen dem Frachtstück bzw. einem Führungselement des Frachtstücks und den Haltenasen jeweils ein Abstand vorgesehen ist. Dadurch wird ein Spielraum bereitgestellt, der eine Führung des Fachstücks erleichtert.

Bei einer weiteren bevorzugten Ausführungsform ist ein/der Halteabschnitt des Seitenführungsadapters, der die Haltekontur aufweist, an der Stirnseite des Distanzelements klappbar oder fest angeordnet. Mit anderen Worten kann der Halteabschnitt an der Stirnseite relativ bewegbar sein. Der Halteabschnitt kann ein separates Teil bilden, das an dem Distanzelement seitlich verschwenkbar angeordnet ist. Bevorzugt ist der Halteabschnitt am Distanzelement seitlich abklappbar angeordnet. Hier ist vorteilhaft, dass der Halteabschnitt im seitlich abgeklappten Zustand eine verbesserte Form zur Aufbewahrung des Seitenführungsadapters aufweist.

Alternativ ist es möglich, dass der Halteabschnitt an der Stirnseite fest ausgebildet ist. Der Halteabschnitt ist hier Teil des Distanzelements. Mit anderen Worten bildet der Halteabschnitt vorzugsweise einen Teil der Stirnseite des Distanzelements. Dadurch wird vorteilhaft eine Handhabung des Seitenführungsadapters vereinfacht, da der Halteabschnitt mit dem Distanzelement ein kompaktes Bauteil bildet.

Der Seitenführungsadapter kann mehrere Halteabschnitte einer jeweiligen Haltekontur aufweisen. Alternativ ist es möglich, dass der Seitenführungsadapter einen einzigen Halteabschnitt mit mindestens einer Haltekontur aufweist.

Vorzugsweise weist das Befestigungselement mindestens zwei voneinander beabstandete Zapfen zum Eingriff in den Schienenabschnitt auf. Zumindest einer der beiden Zapfen kann verschiebbar angeordnet sein. Das Befestigungselement ist vorzugsweise länglich ausgebildet. Die beiden Zapfen sind am Befestigungselement voneinander beanstandet angeordnet. Bevorzugt ist einer der beiden Zapfen in einem Langloch verschiebbar angeordnet. Der Abstand zwischen den beiden Zapfen ist einstellbar. Hierbei ist vorteilhaft, dass bei unterschiedlichen Abständen von Befestigungspunkten des Schienenabschnitts der Abstand zwischen den beiden Zapfen auf die entsprechenden Positionen der Befestigungspunkte angepasst werden kann. Dadurch wird vorteilhaft eine Funktionalität des Seitenführungsadapters bei der Befestigung an dem Schienenabschnitt erhöht.

Alternativ ist es möglich, dass das Befestigungselement einen einzigen Zapfen aufweist. Der oder die Zapfen stehen vorzugsweise über eine Unterkante des Befestigungselements vor und ist/sind dazu ausgebildet, um zum Befestigen in den Schienenabschnitt einzugreifen.

Bei einer bevorzugten Ausführungsform des erfindungsgemäßen Seitenführungssystems weist die Seitenführung mindestens ein Anschlagelement, vorzugsweise mehrere Anschlagelemente, auf, das in Einbaulage oberhalb des Distanzelements angeordnet ist. Mit anderen Worten weist die Seitenführung mindestens ein Anschlagelement auf, wobei das Distanzelement im Gebrauch unterhalb des Anschlagelements angeordnet ist. Vorzugsweise sind mehrere Anschläge an der Seitenführungsschiene angeordnet, die das Distanzelement in Einbaulage oben begrenzen. Bevorzugt überragt das Anschlagelement das Distanzelement in Richtung der Stirnseite des Distanzelements zumindest teilweise. Hier ist vorteilhaft, dass durch das Anschlagelement ein Abheben des Distanzelements von der Seitenführung verhindert und dadurch an der Seitenführung gehalten wird.

Nach dem nebengeordneten Anspruch 13 betrifft die Erfindung ein Frachtdeck mit mindestens einem erfindungsgemäßen Seitenführungsadapter und/oder mindestens einem erfindungsgemäßen Seitenführungssystem.

Bei einer bevorzugten Ausführungsform des erfindungsgemäßen Frachtdecks ist eine Vielzahl von Seitenführungsadaptern im eingeklappten Zustand zur Aufbewahrung in einer gemeinsamen Ebene angeordnet, die unterhalb einer Ladeebene des Frachtdecks liegt. Die Seitenführungsadapter können dabei in Längsrichtung aneinandergereiht angeordnet sein. Bevorzugt sind die Seitenführungsadapter in einer gemeinsamen Ebene zwischen wenigstens zwei Rollenbahnen unterhalb der Ladeebene des Frachtdecks angeordnet. Dadurch können die Seitenführungsadapter platzsparend im nicht-genutzten Laderaumbereich des Frachtdecks aufbewahrt werden. Des Weiteren ist vorteilhaft, dass die Seitenführungsadapter zur Umkonfiguration bzw. Umrüstung des Frachtdecks schnell zur Verfügung stehen.

Nach dem nebengeordneten Anspruch 15 betrifft die Erfindung ein Verfahren zum Umrüsten eines Frachtdecks eines Flugzeugs mittels mindestens eines Seitenführungsadapters, insbesondere eines erfindungsgemäßen Seitenführungsadapters, der mindestens ein Befestigungselement und mindestens ein Distanzelement aufweist, die miteinander gelenkig verbunden sind, wobei bei dem Verfahren der Seitenführungsadapter über das Befestigungselement an einem Schienenabschnitt angebracht wird und anschließend das Distanzelement abgeklappt wird derart, dass das Distanzelement an einer Anschlagfläche einer Seitenführung des Frachtdecks anschlägt.

Hinsichtlich weiterer Vorteile betreffend das Frachtdeck und das Verfahren wird auf die im Zusammenhang mit dem Seitenführungsadapter und dem Seitenführungssystem erläuterten Vorteile verwiesen. Darüber hinaus können das Frachtdeck und das Verfahren alternativ oder zusätzlich einzelne oder eine Kombination mehrerer zuvor in Bezug auf den Seitenführungsadapter sowie das Seitenführungssystem genannter Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie der erfindungsgemäße Seitenführungsadapter, das erfindungsgemäße Seitenführungssystem und das erfindungsgemäße Frachtdeck ausgestaltet sein können.

In diesen zeigen,
- Fig. 1: eine Draufsicht auf ein Frachtdeck nach einem bevorzugten erfindungsgemäßen Ausführungsbeispiel;
- Fig. 2: eine perspektivische Detailansicht des Frachtdecks gemäß Fig. 1 in einem Türbereich;
- Fig. 3: eine perspektivische Ansicht eines Seitenführungsadapters im eingebauten Zustand nach einem erfindungsgemäßen Ausführungsbeispiel;
- Fig. 4: eine perspektivische Ansicht eines Seitenführungsadapters im eingebauten Zustand nach einem weiteren erfindungsgemäßen Ausführungsbeispiel;
- Fig. 5: eine Seitenansicht in X-Richtung des Frachtdecks gemäß Fig. 1;
- Fig. 6: eine perspektivische Ansicht des Seitenführungsadapters gemäß Fig. 3 im Aufbewahrungszustand;
- Fig. 7: eine perspektivische Ansicht einer Befestigungseinrichtung für den Seitenführungsadapter gemäß Fig. 3;
- Fig. 8: eine perspektivische Ansicht mehrerer Seitenführungsadapter gemäß Fig. 4 im Aufbewahrungszustand; und
- Fig. 9: eine perspektivische Ansicht einer weiteren Befestigungseinrichtung für den Seitenführungsadapter gemäß Fig. 4.

Im Folgenden werden für gleiche und gleich wirkende Teile dieselben Bezugsziffern verwendet.

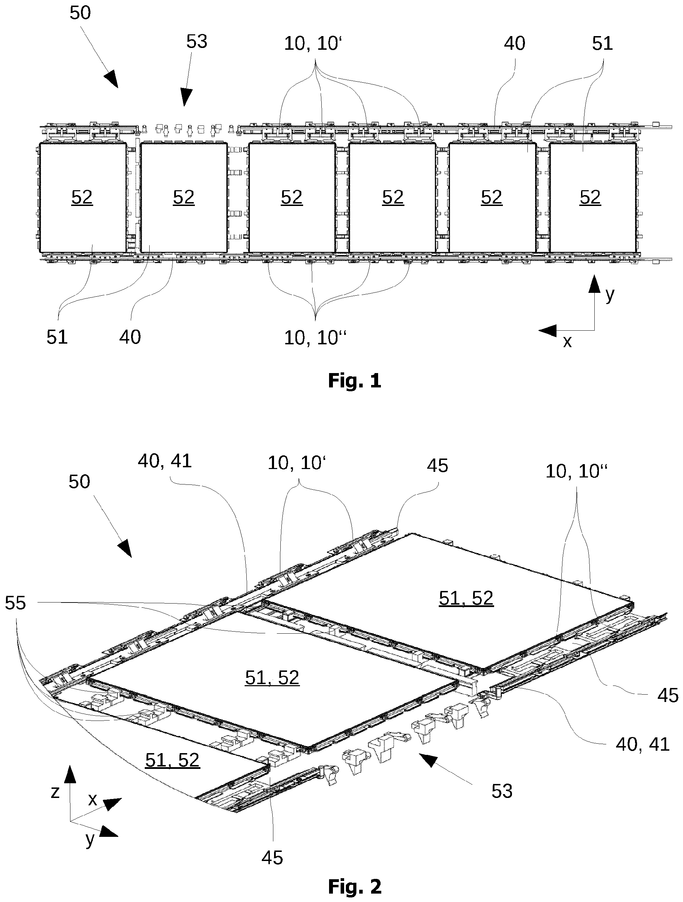

Üblicherweise verwendet man ein kartesisches Koordinatensystem, um innerhalb eines Flugzeugs einzelne Richtungsangaben bereitzustellen. Hierbei erstreckt sich die X-Achse vom Heck zum Bug, die Y-Achse verläuft quer zur X-Achse und liegt im Wesentlichen in der von den Flügeln aufgespannten Ebene. Die Z-Achse steht senkrecht auf der X- und Y-Achse. Dies ist in Fig. 1 und 2 zu erkennen.

Fig. 1 und Fig. 2 zeigen ein Frachtdeck 50 nach einem erfindungsgemäßen Ausführungsbeispiel. Das Frachtdeck 50 weist eine Längserstreckung auf, dessen Längsrichtung im Wesentlichen parallel zur X-Achse des Flugzeugs verläuft. Im Frachtdeck 50 sind mehrere Frachtstücke 51 in Längsrichtung aneinandergereiht und voneinander beanstandet angeordnet. Bei den Frachtstücken 51 handelt es sich um Paletten 52, die bevorzugt im militärischen Bereich eingesetzt werden. Insgesamt sind genau sechs Frachtstücke 51 in Reihe angeordnet.

An jeweils einer Laderaumseite in Querrichtung des Frachtdecks 50 ist ein Seitenführungssystem 40 angeordnet. Die Querrichtung verläuft im Wesentlichen parallel zur Y-Achse des Flugzeugs. Konkret sind im Frachtdeck 50 zwei Seitenführungssysteme 40 in Querrichtung voneinander beabstandet und einander gegenüber angeordnet. Die Seitenführungssysteme 40 begrenzen dabei die Paletten 52 in Querrichtung beidseitig, wobei ein Türbereich 53 ausgenommen ist. Auf der Laderaumseite mit dem Türbereich 53 ist das Seitenführungssystem 40 im Türbereich 53 unterbrochen.

Die beiden Seitenführungssysteme 40 weisen eine Vielzahl von Seitenführungsadaptern 10 auf, die die Paletten 52 seitlich führen und halten. Zusätzlich zur Führungs- und Haltefunktion der Seitenführungsadapter 10 dienen diese zur Übertragung von auftretenden Querkräften von den Frachtstücken auf eine Seitenführung 41 des jeweiligen Seitenführungssystems 40. Auf die Seitenführungsadapter 10 wird später näher eingegangen.

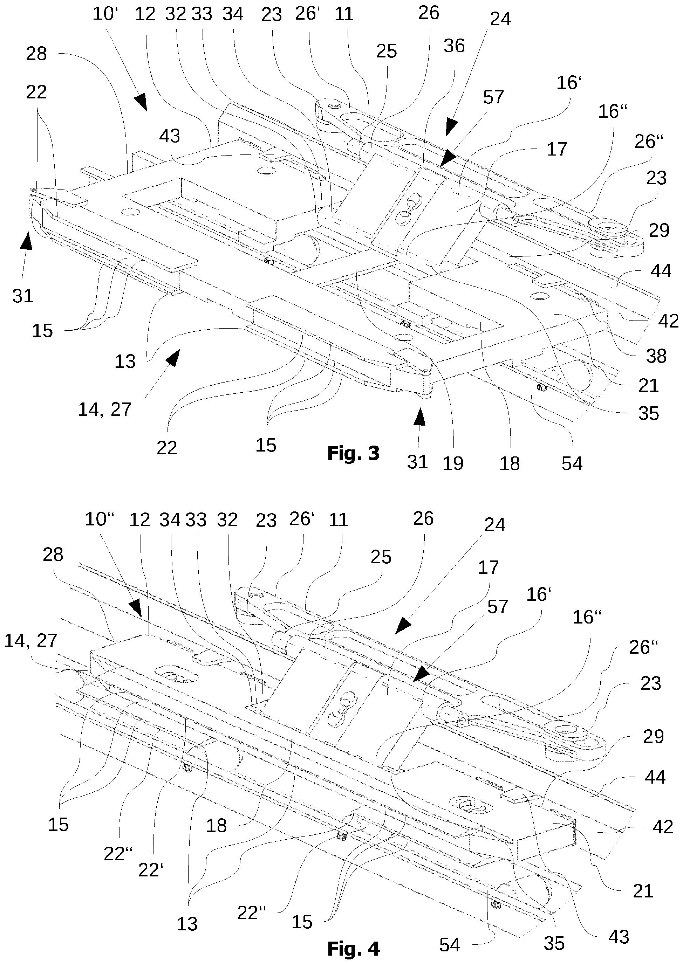

Das jeweilige Seitenführungssystem 40 weist die vorgenannte Seitenführung 41 auf. Die Seitenführung 41 umfasst eine Führungsschiene 44, die sich in Längsrichtung des Frachtdecks 50 erstreckt. Die Führungsschiene 44 weist mindestens eine Anschlagfläche 42 auf, an die mindestens einer der Seitenführungsadapter 10 im ausgeklappten und eingebauten Zustand anschlägt. Dies ist in den Fig. 3 und 4 gut erkennbar. Ferner zeigen Fig. 3 und 4, dass die Führungsschiene 44 der Seitenführung 41 im Bereich jeweils eines Seitenführungsadapters 10 zwei Anschlagelemente 43 aufweist, die den jeweiligen Seitenführungsadapter 10 in Vertikalrichtung des Frachtdecks 50 an der Führungsschiene 44 halten. Die Vertikalrichtung des Frachtdecks 50 verläuft im Wesentlichen parallel zur Z-Achse des Flugzeugs. Auf die Anschlagelemente 43 wird später näher eingegangen.

Ferner weist die Seitenführung 41 wenigstens einen nicht dargestellten Schienenabschnitt zur Befestigung jeweils mindestens eines Seitenführungsadapters 10 auf. Der Schienenabschnitt ist vorzugsweise in Längsrichtung des Frachtdecks 50 ausgerichtet. Der Schienenabschnitt ist bevorzugt durch einen Teilabschnitt einer Lochschiene gebildet. Der Teilabschnitt kann mindestens ein einzelnes Loch, bevorzugt wenigstens zwei Löcher, zur Befestigung aufweisen. Der Schienenabschnitt ist in Vertikalrichtung oberhalb der Führungsschiene 44 bzw. der Anschlagfläche 42 angeordnet.

Wie in Fig. 1 und 2 gut zu erkennen, sind die beiden Seitenführungssysteme 40 in Querrichtung voneinander beabstandet, wobei die Paletten 52 zwischen den Seitenführungssystemen 40 angeordnet sind. Um einen Abstand zwischen der jeweiligen Seitenführung 41 zu überbrücken, weisen die Seitenführungssysteme 40 jeweils die vorgenannten Seitenführungsadapter 10 auf.

Gemäß Fig. 3 und 4 ist jeweils ein Ausführungsbeispiel eines erfindungsgemäßen Seitenführungsadapters 10 gezeigt. Konkret zeigt Fig. 3 exemplarisch einen ersten Typ eines der Seitenführungsadapter 10', die in Querrichtung auf der Laderaumseite des Frachtdecks 50 mit dem Türbereich 53 angeordnet sind. Fig. 4 zeigt exemplarisch einen zweiten Typ eines der Seitenführungsadapter 10", die in Querrichtung auf der dem Türbereich 53 gegenüberliegenden Laderaumseite des Frachtdecks 50 angeordnet sind.

Die Seitenführungsadapter 10', 10" gemäß Fig. 3 und 4 weisen jeweils ein Befestigungselement 11 zum Befestigen an dem nicht dargestellten Schienenabschnitt der Seitenführung 41 auf. Das Befestigungselement 11 ist länglich ausgebildet. Das Befestigungselement 11 weist einen ersten Verbindungsbereich 24 auf, der ein erstes Gelenksteil 25 umfasst. Das erste Gelenkteil 25 bildet mit einem zweiten Gelenkteil 26 eines Verbinders 17 ein erstes Gelenk 57 mit einer ersten Gelenkachse 16'. Die erste Gelenkachse 16' bildet eine Drehachse, um die das Befestigungselement 11 drehbar gelagert ist. Auf den Verbinder 17 wird später näher eingegangen.

Der Verbindungsbereich 24 ist in Längsrichtung des Befestigungselements 11 zwischen zwei Befestigungsbereichen 26', 26" angeordnet. Dabei weist ein erster Befestigungsbereich 26' einen ersten stationären Zapfen 23 auf. Der erste Zapfen 23 ist an einem Längsende des Befestigungselements 11 fest angeordnet. Der zweite Befestigungsbereich 26" ist an dem Verbindungsbereich 24 in Längsrichtung dem ersten Befestigungsbereich 26' gegenüberliegend angeordnet. Der zweite Befestigungsbereich 26" umfasst in Längsrichtung ein Langloch, in dem ein zweiter Zapfen 23 beweglich geführt ist. Der zweite Zapfen 23 ist zum ersten Zapfen 23 relativ verschiebbar. Die beiden Zapfen 23 sind in Längsrichtung voneinander beabstandet. Die beiden Zapfen 23 dienen zur Befestigung des Befestigungselements 11 an dem nicht dargestellten Schienenabschnitt, der bevorzugt ein Lochschienenabschnitt ist. Dabei stehen die beiden Zapfen 23 mit dem Schienenabschnitt in Eingriff.

Des Weiteren weisen die Seitenführungsadapter 10', 10" ein Distanzelement 12 zum Überbrücken eines Abstands zwischen der Seitenführung 41 und der Palette 52 auf. Konkret überbrückt das Distanzelement 12 im ausgeklappten und eingebauten Zustand einen seitlichen Spalt 45 zwischen der Führungsschiene 44 und einem Rand der Palette 52.

Das Distanzelement 12 ist plattenförmig ausgebildet. Mit anderen Worten bildet das Distanzelement 12 eine Abstandsplatte. Das Distanzelement 12 weist zwei parallele Längsseiten 27 und zwei parallele Breitseiten 28 auf, wobei die Längsseiten 27 größer als die Breitseiten 28 sind. Die Längsseiten 27 und die Breitseiten 28 sind im Wesentlichen orthogonal zueinander ausgerichtet. Des Weiteren weist das Distanzelement 12 eine Dicke auf, die kleiner als die Längsseiten 27 und die Breitseiten 28 des Distanzelements 12 ist. Mit anderen Worten ist das Distanzelement 12 quaderförmig ausgebildet.

Das Distanzelement 12 weist eine Stirnseite 14 auf, die durch eine erste der Längsseiten 27 gebildet ist. Die Stirnseite 14 des Distanzelements 12 verläuft in Längsrichtung des Frachtdecks 50. Die Stirnseite 14 ist im Gebrauch einem Frachtstück 51 zugewandt. Eine zweite der beiden Längsseiten 27 ist der Stirnseite 14 gegenüber angeordnet. Die zweite der beiden Längsseiten 27 bildet eine Anschlagseite 29, durch die das Distanzelement 12 an der Anschlagfläche 42 der Seitenführung 41 anschlägt.

Bei dem Seitenführungsadapter 10' gemäß Fig. 3 sind an der Stirnseite 14 des Distanzelements 12 zwei Halteabschnitte 13 klappbar angeordnet. Konkret sind die Halteabschnitte 13 an Eckbereichen 31 der Stirnseite 14 seitlich verschwenkbar angeordnet. Dazu weist das Distanzelement 12 jeweils in einem Eckbereich 31 ein Scharnier auf, durch das der jeweilige Halteabschnitt 13 schwenkbar angeordnet ist.

Wie in Fig. 3 gezeigt, sind die beiden Halteabschnitte 13 entlang der Stirnseite 14 voneinander beabstandet angeordnet. Die Halteabschnitte 13 umfassen jeweils eine Haltekontur 15, um die jeweilige Palette 52 zu führen bzw. zu halten. Die Haltekontur 15 ist durch zwei gegenüber angeordnete Haltenasen 22 gebildet, die in Vertikalrichtung voneinander beabstandet sind. Mit anderen Worten ist die Haltekontur 15 U-förmig ausgebildet. Die Haltekontur 15 stellt einen Freiraum zur Verfügung, der in Einbaulage oben und unten durch eine Haltenase 22 begrenzt ist. Im ausgeklappten und eingebauten Zustand des Seitenführungsadapters 10 ist die Haltekontur 15 zur Palette 52 hin offen. Wie in Fig. 3 zu erkennen ist, ist die Haltekontur 15 an dem jeweiligen Halteabschnitt 13 in Längsrichtung durchgängig ausgebildet. Alternativ ist möglich, dass die Haltekontur 15 an dem jeweiligen Halteabschnitt 13 teilweise bzw. abschnittsweise in Längsrichtung ausgebildet ist.

Der Seitenführungsadapter 10" gemäß Fig. 4 weist im Unterschied zum Seitenführungsadapter 10' gemäß Fig. 3 einen einzigen Halteabschnitt 13 auf, der an der Stirnseite 14 des Distanzelements 12 fest ausgebildet ist. Dieser Halteabschnitt 13 weist eine Haltekontur 15 mit einer durchgängigen Haltenase 22' und einer geteilten Haltenase 22" auf. Die durchgängige Haltenase 22' und die geteilte Haltenase 22" sind einander gegenüber angeordnet. Im Einbaulage ist die durchgängige Haltenase 22' obenliegend und die geteilte Haltenase 22" untenliegend an der Stirnseite 14 angeordnet. Die durchgängige Haltenase 22' ist entlang der Stirnseite 14 in Längsrichtung geschlossen ausgebildet. Die geteilte Haltenase 22" ist in Längsrichtung unterbrochen ausgebildet.

Bei dem Seitenführungsadapter 10', 10" gemäß Fig. 3 und 4 umfasst das Distanzelement 12 des Weiteren eine Aufnahmeöffnung 18 und eine Oberfläche 21. Die Aufnahmeöffnung 18 durchdringt das Distanzelement 12 ausgehend von der Oberfläche 21 vollständig. Mit anderen Worten bildet die Aufnahmeöffnung 18 ausgehend von der Oberfläche 21 einen freien Durchgang durch das Distanzelement 12. Die Oberfläche 21 des Distanzelements 12 ist zur Stirnseite 14 orthogonal ausgebildet. Die Oberfläche 21 ist im ausgeklappten und eingebauten Zustand des Seitenführungsadapters 10 in Vertikalrichtung oben angeordnet.

Die Aufnahmeöffnung 18 des Distanzelements 12 gemäß Fig. 3 ist T-förmig ausgebildet. Die Aufnahmeöffnung 18 ist in dem Distanzelement 12 umlaufend begrenzt ausgebildet. Im Unterschied dazu, ist die Aufnahmeöffnung 18 des Distanzelements 12 gemäß Fig. 4 zur Anschlagseite 29 hin offen ausgebildet. Die Aufnahmeöffnung 18 ist im ausgeklappten und eingebauten Zustand zur Anschlagfläche 42 hin offen ausgebildet. Die Aufnahmeöffnung 18 gemäß Fig. 4 ist C-förmig ausgebildet.

Das Distanzelement 12 des Seitenführungsadapters 10' gemäß Fig. 3 umfasst ferner eine Auflagefläche 19, die eine Begrenzung an der der Oberfläche 21 gegenüberliegenden Seite für die Aufnahmeöffnung 18 bildet. Wie in Fig. 3 ersichtlich, ist die Auflagefläche 19 Teil eines Querstegs, der die Aufnahmeöffnung 18 in Querrichtung überspannt.

Das Distanzelement 12 der beiden Seitenführungsadapter 10', 10" weist einen zweiten Verbindungsbereich 32 auf, der ein drittes Gelenksteil 33 umfasst. Das dritte Gelenkteil 33 bildet mit einem vierten Gelenkteil 34 des Verbinders 17 ein zweites Gelenk 35 mit einer zweiten Gelenkachse 16". Die zweite Gelenkachse 16" bildet eine weitere Drehachse, um die das Distanzelement 12 drehbar gelagert ist.

Der zweite Verbindungsbereich 32 ist in der Aufnahmeöffnung 18 angeordnet. Das dritte Gelenkteil 33 ist Teil des Distanzelements 12. Die zweite Gelenkachse 16" ist in der Aufnahmeöffnung 18 eingebettet. Die erste Gelenkachse 16' ist in das Befestigungselement 11 eingebettet. Die beiden Gelenkachsen 16', 16" sind parallel angeordnet. Die beiden Gelenkachsen 16', 16" sind voneinander beabstandet. Ferner sind die beiden Gelenkachsen 16', 16" mit der Stirnseite 14 des Distanzelements 12 parallel angeordnet.

Wie vorstehend beschrieben, weist der Seitenführungsadapter 10 einen Verbinder 17 auf. Der Verbinder 17 verbindet das Distanzelement 12 und das Befestigungselement 11 miteinander. Der Verbinder 17 erstreckt sich zwischen dem Distanzelement 12 und dem Befestigungselement 11. Der Verbinder 17 bildet ein Stegelement. Der Verbinder 17 ist quer zur Stirnseite 14 des Distanzelements 12 angeordnet.

Wie in Fig. 3 gut erkennbar, weist der Verbinder 17 die erste und zweite Gelenkachse 16', 16" auf, wobei jeweils eine der Gelenkachsen 16', 16" an einem Längsende des Verbinders 17 angeordnet ist. Der Verbinder 17 bildet mit dem Befestigungselement 11 und dem Distanzelement 12 das erste und zweite Gelenk 57, 35. Der Verbinder 17 bildet somit ein Doppelgelenk. Mit anderen Worten sind das Befestigungselement 11 und das Distanzelement 12 durch den Verbinder 17 doppelgelenkig miteinander verbunden.

Bei dem Seitenführungsadapter 10' gemäß Fig. 3 ist durch den Verbinder 17 das Befestigungselement 11 in die Aufnahmeöffnung 18 einschwenkbar. Die erste Gelenkachse 16' ist dabei derart angeordnet, dass das Befestigungselement 11 zusammen mit dem Verbinder 17 in die Aufnahmeöffnung 18 einschwenkbar sind. Dies entspricht dem eingeklappten Zustand des Seitenführungsadapters 10' gemäß Fig. 3, in dem das Befestigungselement 11 und der Verbinder 17 in der Aufnahmeöffnung 18 versenkt sind. Das Befestigungselement 11 und der Verbinder 17 können im eingeklappten Zustand zumindest mit der Oberfläche 21 bündig abschließen. Mit anderen Worten können das Befestigungselement 11 und der Verbinder 17 im eingeklappten Zustand derart versenkt sein, dass diese nicht über die Oberfläche 21 vorstehen.

Im eingeklappten Zustand ist es vorgesehen, dass das Befestigungselement 11 und der Verbinder 17 auf der Auflagefläche 19 aufliegen. Der Verbinder 17 weist eine Nut 36 auf, die mit der Form der Auflagefläche 19 korrespondiert.

Bei dem Seitenführungsadapter 10" gemäß Fig. 4 ist nur der Verbinder 17 in die Aufnahmeöffnung 18 einschwenkbar. Die erste Gelenkachse 16' ist dabei derart angeordnet, dass der Verbinder 17 in die Aufnahmeöffnung 18 einschwenkbar ist. Dies entspricht dem eingeklappten Zustand des Seitenführungsadapters 10" gemäß Fig. 4, in dem der Verbinder 17 in der Aufnahmeöffnung 18 versenkt ist. Der Verbinder 17 kann im eingeklappten Zustand zumindest mit der Oberfläche 21 bündig abschließen. Mit anderen Worten kann der Verbinder 17 im eingeklappten Zustand derart versenkt sein, dass dieser nicht über die Oberfläche 21 vorsteht.

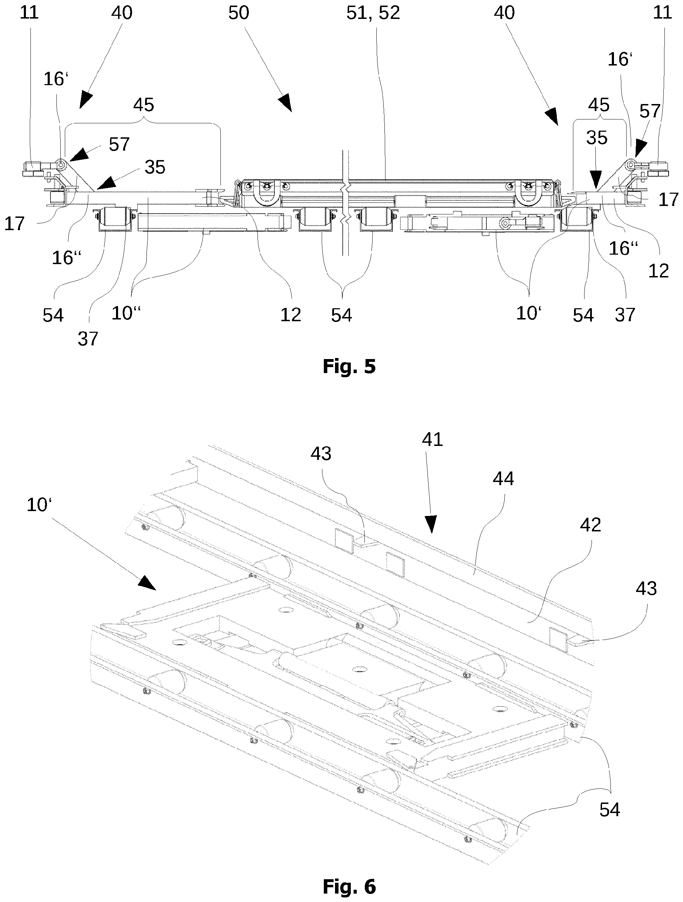

Wie in Fig. 3 und 4 gezeigt, weisen das Befestigungselement 11 und das Distanzelement 12 im ausgeklappten Zustand einen Versatz in Vertikalrichtung auf. Konkret sind das Befestigungselement 11 und das Distanzelement 12 im ausgeklappten Zustand in unterschiedlichen Ebenen angeordnet, die in Vertikalrichtung voneinander beabstandet sind. Dies ist ebenfalls in Fig. 5 gut zu erkennen.

Um den Seitenführungsadapter 10', 10" gemäß Fig. 3 und 4 im ausgeklappten und eingebauten Zustand an der Führungsschiene 44 der Seitenführung 41 in Vertikalrichtung zu halten, weist die Führungsschiene 44 zwei Anschlagelemente 43 auf. Die Anschlagelemente 43 erstrecken sich ausgehend von der Anschlagfläche 42 in Querrichtung (Y-Achse) zum Frachtraum des Frachtdecks 50 hin. Die Anschlagelemente 43 überragen das Distanzelement 12 in Querrichtung. Mit anderen Worten sind die Anschlagelemente 43 im eingebauten Zustand oberhalb eines Teilbereichs des Distanzelements 12 angeordnet. Die Anschlagelemente 43 bilden einen vertikalen Anschlag, d.h. eine vertikale Begrenzung. Die Anschlagelemente 43 begrenzen eine Vertikalbewegung des Distanzelements 12. Die Anschlagelemente 43 sind am Verbinder 17 in Längsrichtung einander gegenüberliegend angeordnet. Mit anderen Worten ist jeweils eines der Anschlagelemente 43 in Längsrichtung auf einer Seite des Verbinders 17 ausgebildet.

Das Distanzelement 12 des Seitenführungsadapters 10' gemäß Fig. 3 weist zwei Gegenanschlagelemente 38 auf, die in Einbaulage den Anschlagelementen 43 der Führungsschiene 44 gegenüber angeordnet sind. Die Gegenanschlagelemente 38 können mit den Anschlagelementen 43 zur vertikalen Begrenzung zusammenwirken. Bei dem Seitenführungsadapter 10" gemäß Fig. 4 fehlen derartige Gegenanschlagelemente.

Bei dem erfindungsgemäßen Frachtdeck 50 sind mehrere Rollenbahnen 54 in Längsrichtung des Frachtdecks 50 zur Be- und Entladung des Frachtraums angeordnet. Wie in Fig. 5 zu erkennen ist, weisen die Seitenführungsadapter 10', 10" an deren Unterseite Rollenkonturen 37 auf, um mit den Rollen der Rollenbahnen 54 zu korrespondieren.

Fig. 5 zeigt ferner eine Palette 52, die zwischen den Seitenführungsadaptern 10', 10" geführt und gehalten ist. Die Seitenführungsadapter 10', 10" sind dazu ausgebildet, auftretende Kräfte in Querrichtung des Frachtdecks 50 aufzunehmen und in die jeweilige Führungsschiene 44 der Seitenführung 41 einzuleiten. Zur Kraftaufnahme in Längsrichtung und Vertikalrichtung des Frachtdecks 50 werden zusätzliche Riegelvorrichtungen 55 eingesetzt, die in Fig. 2 gut ersichtlich sind.

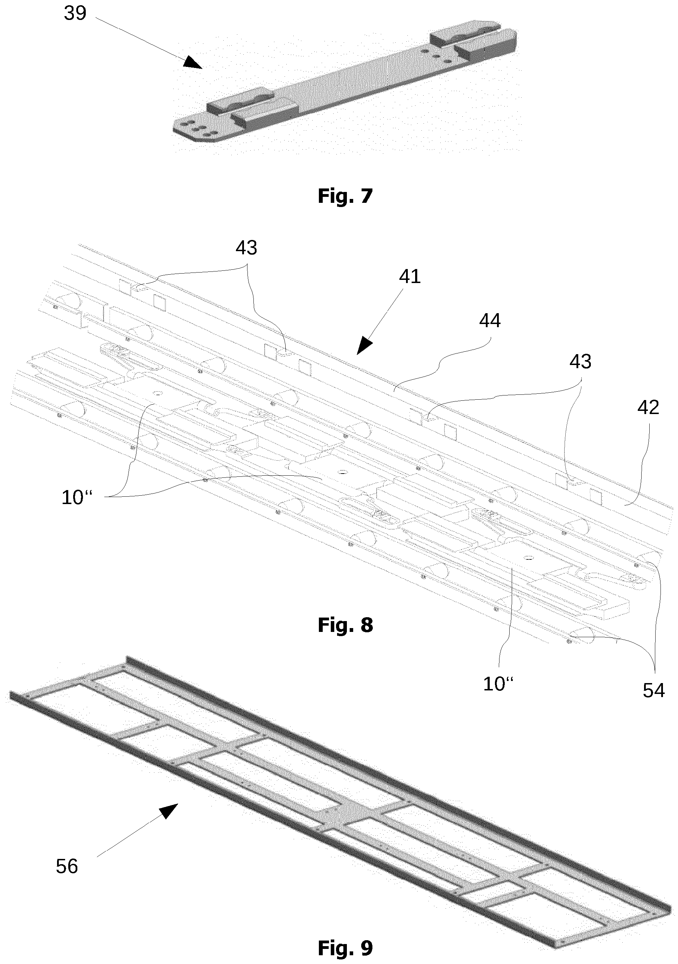

Die Fig. 6 und 8 zeigen Seitenführungsadapter 10', 10" im eingeklappten Zustand. In Fig. 6 ist exemplarisch ein einzelner Seitenführungsadapter 10' gemäß Fig. 3 gezeigt, der im eingeklappten Zustand zwischen zwei Rollenbahnen 54 unterhalb einer Ladeebene des Frachtdecks 50 angeordnet ist. Hierbei sind die beiden Halteabschnitte 13 seitlich an die Breitseiten 28 des Distanzelements 12 geklappt und das Befestigungselement 11 und der Verbinder 17 in der Aufnahmeöffnung 18 versenkt. Die Ladeebene ist eine gedachte Ebene, die aufgespannt mit ihrer Ebenenfläche auf den Rollen der Rollenbahnen 54 aufliegt.

Um den Seitenführungsadapter 10' in seiner Aufbewahrungsebene zu fixieren, sind Befestigungsvorrichtungen 39 vorgesehen (vgl. Fig. 7), die an nicht dargestellten Querstreben der Flugzeugstruktur angeordnet sind. Vorzugsweise sind zwei Befestigungsvorrichtungen 39 an jeweils zwei benachbarten Querstreben angeordnet. Der Abstand zwischen den Querstreben kann ca. 535 mm betragen. Dies entspricht einem standardisierten Spantenabstand der Flugzeugstruktur.

Bevorzugt ist jeweils ein Seitenführungsadapter 10' gemäß Fig. 3 mittels eines Schnellverschlusssystems an den beiden Befestigungsvorrichtungen 39 befestigbar.

In Fig. 8 sind mehrere in Längsrichtung aneinandergereihte und in Querrichtung wechselseitig angeordnete Seitenführungsadapter 10" gemäß Fig. 4 gezeigt, die im eingeklappten Zustand zwischen zwei Rollenbahnen 54 unterhalb der Ladeebene des Frachtdecks 50 angeordnet sind. Im eingeklappten Zustand sind das Befestigungselement 11 und der Verbinder 17 zur Anschlagseite 29 des Distanzelements 12 hin derart abgeklappt, dass diese in einer gemeinsamen Ebene liegen. Um die eingeklappten Seitenführungsadapter 10" verbessert lagern bzw. aufbewahren zu können, ist bevorzugt ein Rahmen 56 vorgesehen (vgl. Fig. 9), in dem die Seitenführungsadapter 10" in ihrer vorstehend beschriebenen Anordnung aufgenommen sind. Die vertikale Lage der beiden Seitenführungsadapter 10', 10" in der Aufbewahrungsebene unterhalb der Ladeebene ist in Fig. 5 gut ersichtlich.

Die Verbindung zwischen dem Befestigungselement 11 und dem Schienenabschnitt, insbesondere dem Lochschienenabschnitt, kann auf unterschiedliche Art und Weise hergestellt werden. Eine reversible Verbindungsmöglichkeit ist in der DE 42 16 413 A1 beschrieben. In einem weiteren erfindungsgemäßen Ausführungsbeispiel sind mindestens zwei Zapfen vorgesehen, die in die korrespondierenden Löcher des Lochschienenabschnitts hineinragen. Zwischen den Zapfen befindet sich ein verdrehbarer T-Anker. Nach dem Einsetzen des Befestigungselements 11, wird dieser T-Anker so verdreht, dass das Befestigungselement 11 an den Abschnitten zwischen den Löchern derart hält, dass dieses in Z-Richtung nicht entnommen werden kann. Im eingesetzten Zustand verhindern dann die Zapfen ein Verschieben des Befestigungselements in X-Richtung.

### Bezugszeichenliste

- 10: Seitenführungsadapter
- 10': Seitenführungsadapter ersten Typs
- 10": Seitenführungsadapter zweiten Typs
- 11: Befestigungselement
- 12: Distanzelement
- 13: Halteabschnitt
- 14: Stirnseite
- 15: Haltekontur
- 16: Gelenkachse
- 16': erste Gelenkachse
- 16": zweite Gelenkachse
- 17: Verbinder
- 18: Aufnahmeöffnung
- 19: Auflagefläche
- 21: Oberfläche
- 22: Haltenase
- 22': durchgängige Haltenase
- 22": geteilte Haltenase
- 23: Zapfen
- 24: erster Verbindungsbereich
- 25: erstes Gelenkteil
- 26: zweites Gelenkteil
- 26': erster Befestigungsbereich
- 26": zweiter Befestigungsbereich
- 27: Längsseite
- 28: Breitseite
- 29: Anschlagseite
- 31: Eckbereiche
- 32: zweiter Verbindungsbereich
- 33: drittes Gelenkteil
- 34: viertes Gelenkteil
- 35: zweites Gelenk
- 36: Nut
- 37: Rollenkonturen
- 38: Gegenanschlagelement
- 39: Befestigungsvorrichtung
- 40: Seitenführungssystem
- 41: Seitenführung
- 42: Anschlagfläche
- 43: Anschlagelement
- 44: Führungsschiene
- 45: seitlichen Spalt
- 50: Frachtdeck
- 51: Frachtstück
- 52: Palette
- 53: Türbereich
- 54: Rollenbahn
- 55: Riegelvorrichtungen
- 56: Rahmen
- 57: erstes Gelenk

## Patentansprüche

1. Seitenführungsadapter (10) zum Führen und/oder Halten eines Frachtstücks (51), insbesondere einer Palette (52), in einem Flugzeug, umfassend:
- mindestens ein Befestigungselement (11) zur Befestigung an einem Lochschienenabschnitt einer Seitenführung (41);
- mindestens ein Distanzelement (12) zum Überbrücken eines Abstands zu dem Frachtstück (51), wobei das Distanzelement (12) und das Befestigungselement (11) gelenkig miteinander verbunden sind; und
- mindestens einen Halteabschnitt (13) für das Frachtstück (51), der an einer Stirnseite (14) des Distanzelements (12) angeordnet ist und mindestens eine Haltekontur (15) zum Führen und/oder Halten des Frachtstücks (51) aufweist, **dadurch gekennzeichnet, dass** die Haltekontur (15) im Gebrauch den Seitenführungsadapter (10) mit dem Frachtstück (51) zumindest teilweise formschlüssig verbindet.

2. Seitenführungssystem (40) mit einer Seitenführung (41), die mindestens einen Lochschienenabschnitt, und mindestens eine Anschlagfläche (42) aufweist, und mindestens einem Seitenführungsadapter (10) nach Anspruch 1, wobei im ausgeklappten Zustand das Befestigungselement (11) des Seitenführungsadapters (10) an dem Schienenabschnitt befestigt ist und das Distanzelement (12) des Seitenführungsadapters (10) an die Anschlagfläche (42) der Seitenführung (41) anschlägt.

3. Seitenführungsadapter (10) nach Anspruch 1 bzw. Seitenführungssystem (40) nach Anspruch 2,
**dadurch gekennzeichnet, dass**
das Distanzelement (12) und/oder das Befestigungselement (11) um mindestens eine Gelenkachse (16) drehbar gelagert sind/ist, die parallel zur Stirnseite (14) des Distanzelements (12) verläuft.

4. Seitenführungsadapter (10) nach mindestens einem der vorhergehenden Ansprüche bzw. Seitenführungssystem (40) nach Anspruch 2 oder 3,
**dadurch gekennzeichnet, dass**
das Befestigungselement (11) um eine erste Gelenkachse (16') drehbar gelagert ist und/oder das Distanzelement (12) um eine zweite Gelenkachse (16") drehbar gelagert ist, wobei die beiden Gelenkachsen (16', 16") voneinander beabstandet und/oder parallel zueinander angeordnet sind.

5. Seitenführungsadapter (10) nach mindestens einem der vorhergehenden Ansprüche bzw. Seitenführungssystem (40) nach mindestens einem der Ansprüche 2 bis 4,
**gekennzeichnet durch**,
mindestens einen Verbinder (17), der eine/die mindestens eine Gelenkachse (16), insbesondere die erste und zweite Gelenkachse (16', 16"), aufweist und das Distanzelement (12) mit dem Befestigungselement (11) gelenkig verbindet.

6. Seitenführungsadapter (10) bzw. Seitenführungssystem (40) nach Anspruch 5,
**dadurch gekennzeichnet, dass**
der Verbinder (17) quer zur Stirnseite (14) des Distanzelements (12) angeordnet ist und sich zwischen dem Distanzelement (12) und dem Befestigungselement (11) erstreckt.

7. Seitenführungsadapter (10) bzw. Seitenführungssystem (40) nach mindestens einem der Ansprüche 5 oder 6,
**dadurch gekennzeichnet, dass**
das Distanzelement (12) mindestens eine Aufnahmeöffnung (18) aufweist, in die das Befestigungselement (11) und/oder der Verbinder (17) zum Verstauen einschwenkbar sind/ist.

8. Seitenführungsadapter (10) nach mindestens einem der vorhergehenden Ansprüche bzw. Seitenführungssystem (40) nach mindestens einem der Ansprüche 2 bis 7,
**dadurch gekennzeichnet, dass**
das Distanzelement (12) mindestens eine Oberfläche (21) aufweist, mit der das Befestigungselement (11) im eingeschwenkten Zustand zumindest bündig abschließt.

9. Seitenführungsadapter (10) nach mindestens einem der vorhergehenden Ansprüche bzw. Seitenführungssystem (40) nach mindestens einem der Ansprüche 2 bis 8,
**dadurch gekennzeichnet, dass**
das Distanzelement (12) und/oder das Befestigungselement (11) und/oder ein/der Verbinder (17) plattenförmig ausgebildet sind/ist.

10. Seitenführungsadapter (10) nach mindestens einem der vorhergehenden Ansprüche bzw. Seitenführungssystem (40) nach mindestens einem der Ansprüche 2 bis 9,
**dadurch gekennzeichnet, dass**
die Haltekontur (15) des Seitenführungsadapters (10) zwei gegenüber angeordnete Haltenasen (22) aufweist, die vom Distanzelement (12) abstehend ausgebildet sind und zur Aufnahme des Frachtstücks (51) voneinander beabstandet sind.

11. Seitenführungsadapter (10) nach mindestens einem der vorhergehenden Ansprüche bzw. Seitenführungssystem (40) nach mindestens einem der Ansprüche 2 bis 10,
**dadurch gekennzeichnet, dass**
das Befestigungselement (11) mindestens zwei voneinander beabstandete Zapfen (23) zum Eingriff in den Schienenabschnitt aufweist, wobei zumindest einer der beiden Zapfen (23) verschiebbar angeordnet ist.

12. Seitenführungssystem (40) nach mindestens einem der Ansprüche 2 bis 11,
**dadurch gekennzeichnet, dass**
die Seitenführung (41) mindestens ein Anschlagelement (43), vorzugsweise mehrere Anschlagelemente (43), aufweist, das in Einbaulage oberhalb des Distanzelements (12) angeordnet ist.

13. Frachtdeck (50) mit mindestens einem Seitenführungsadapter (10) nach mindestens einem der vorhergehenden Ansprüche und/oder mindestens einem Seitenführungssystem (40) nach mindestens einem der Ansprüche 2 bis 12.

14. Frachtdeck nach Anspruch 13,
**dadurch gekennzeichnet, dass**
eine Vielzahl von Seitenführungsadaptern (10) im eingeklappten Zustand zur Aufbewahrung in einer (gemeinsamen) Ebene angeordnet sind, die unterhalb einer Ladeebene des Frachtdecks (50) liegt.

15. Verfahren zum Umrüsten eines Frachtdecks (50) eines Flugzeugs mittels mindestens eines Seitenführungsadapters (10) nach mindestens einem der Ansprüche 1 bis 12, der mindestens ein Befestigungselement (11) und mindestens ein Distanzelement (12) aufweist, die miteinander gelenkig verbunden sind, wobei bei dem Verfahren der Seitenführungsadapter (10) über das Befestigungselement (11) an einem Schienenabschnitt angebracht wird und anschließend das Distanzelement (12) abgeklappt wird derart, dass das Distanzelement (12) an einer Anschlagfläche (42) einer Seitenführung (41) des Frachtdecks (50) anschlägt.

## Claims

1. Side guide adapter (10) for guiding and/or retaining a cargo item (51), in particular a pallet (52), in an aircraft, comprising:
- at least one fastening element (11) for fastening to a perforated rail section, of a side guide (41);
- at least one spacer element (12) for bridging a distance to the cargo item (51), wherein the spacer element (12) and the fastening element (11) are hingedly connected to each other; and
- at least one retaining section (13) for the cargo item (51), which is arranged on an end face (14) of the spacer element (12) and comprises at least one retaining contour (15) for guiding and/or retaining the cargo item (51) **characterized in that** the retaining contour (15) at least partially connects the side guide adapter (10) to the cargo item (51) in a form-fitting manner during use.

2. Side guide system (40) having a side guide (41), which has at least one perforated rail section, and at least one abutment surface (42), and at least one side guide adapter (10), in particular according to claim 1, wherein, in the unfolded state, the fastening element (11) of the side guide adapter (10) is fastened to the rail section and the spacer element (12) of the side guide adapter (10) abuts the abutment surface (42) of the side guide (41).

3. Side guide adapter (10) according to claim 1 or side guide system (40) according to claim 2,
**characterized in that**
the spacer element (12) and/or the fastening element (11) are/is rotatably mounted about at least one hinge axis (16) which extends parallel to the end face (14) of the spacer element (12).

4. Side guide adapter (10) according to at least one of the preceding claims or side guide system (40) according to claim 2 or 3,
**characterized in that**
the fastening element (11) is rotatably mounted about a first hinge axis (16') and/or the spacer element (12) is rotatably mounted about a second hinge axis (16"), wherein the two hinge axes (16', 16") are arranged at a distance from one another and/or parallel to one another.

5. Side guide adapter (10) according to at least one of the preceding claims or side guide system (40) according to at least one of claims 2 to 4,
**characterized by**
at least one connector (17), which comprises a/the at least one hinge axis (16), in particular the first and second hinge axis (16', 16"), and hingedly connects the spacer element (12) to the fastening element (11).

6. Side guide adapter (10) or side guide system (40) according to claim 5,
**characterized in that**
the connector (17) is arranged transversely to the end face (14) of the spacer element (12) and extends between the spacer element (12) and the fastening element (11).

7. Side guide adapter (10) or side guide system (40) according to at least one of claims 5 or 6,
**characterized in that**
the spacer element (12) comprises at least one receiving opening (18) into which the fastening element (11) and/or the connector (17) can be/is pivoted for storage.

8. Side guide adapter (10) according to at least one of the preceding claims or side guide system (40) according to at least one of claims 2 to 7,
**characterized in that**
the spacer element (12) comprises at least one surface (21) with which the fastening element (11) is at least flush in the folded state.

9. Side guide adapter (10) according to at least one of the preceding claims or side guide system (40) according to at least one of claims 2 to 8,
**characterized in that**
the spacer element (12) and/or the fastening element (11) and/or a/the connector (17) are/is of plate-shaped design.

10. Side guide adapter (10) according to at least one of the preceding claims or side guide system (40) according to at least one of claims 2 to 9,
**characterized in that**
the retaining contour (15) of the side guide adapter (10) comprises two oppositely arranged retaining lugs (22) which are formed so as to protrude from the spacer element (12) and are spaced apart from one another for accommodating the cargo item (51).

11. Side guide adapter (10) according to at least one of the preceding claims or side guide system (40) according to at least one of claims 2 to 10,
**characterized in that**
the fastening element (11) has at least two spaced-apart pins (23) for engaging the rail section, wherein at least one of the two pins (23) is displaceably arranged.

12. Side guide system (40) according to at least one of claims 2 to 11,
**characterized in that**
the side guide (41) comprises at least one stop element (43), preferably a plurality of stop elements (43), which is arranged above the spacer element (12) in the installed position.

13. Cargo deck (50) comprising at least one side guide adapter (10) according to at least one of the preceding claims and/or at least one side guide system (40) according to at least one of claims 2 to 12.

14. Cargo deck according to claim 13,
**characterized in that**
a plurality of side guide adapters (10) are arranged in a folded state for storage in a (common) plane that lies below a loading plane of the cargo deck (50).

15. Method for converting a cargo deck (50) of an aircraft by means of at least one side guide adapter (10), in particular according to at least one of claims 1 to 12, which comprises at least one fastening element (11) and at least one spacer element (12) which are hingedly connected to one another, in which method the side guide adapter (10) is attached to a rail section via the fastening element (11) and subsequently the spacer element (12) is folded down in such a way that the spacer element (12) abuts an abutment surface (42) of a side guide (41) of the cargo deck (50).

## Revendications

1. Adaptateur de guide latéral (10) pour le guidage et/ou le maintien d'un élément de cargaison (51), en particulier d'une palette (52), dans un avion, comprenant :
- au moins un élément de fixation (11) pour la fixation sur un tronçon de rail perforé d'un guide latéral (41) ;
- au moins un élément d'écartement (12) destiné à franchir une distance par rapport à l'élément de cargaison (51), l'élément d'écartement (12) et l'élément de fixation (11) étant articulés l'un avec l'autre, et
- au moins une partie de maintien (13) pour l'élément de cargaison (51), qui est disposée sur une face frontale (14) de l'élément d'écartement (12) et comporte au moins un profil de maintien (15) pour guider et/ou retenir l'élément de cargaison (51)
**caractérisé en ce que** le profil de maintien (15) relie au moins partiellement l'adaptateur de guide latéral (10) à l'élément de cargaison (51) en correspondance de forme pendant l'utilisation.

2. Système de guide latéral (40) avec un guide latéral (41) qui comporte au moins un tronçon de rail perforé et au moins une surface de butée (42) et avec au moins un adaptateur de guide latéral (10) selon la revendication 1, dans lequel, dans l'état déployé, l'élément de fixation (11) de l'adaptateur de guide latéral (10) est fixé sur le tronçon de rail et l'élément d'écartement (12) de l'adaptateur de guide latéral (10) bute sur la surface de butée (42) du guide latéral (41).

3. Adaptateur de guide latéral (10) selon la revendication 1 ou système de guide latéral (40) selon la revendication 2, **caractérisé en ce que** l'élément d'écartement (12) et/ou l'élément de fixation (11) sont supportés avec possibilité de rotation autour d'au moins un axe d'articulation (16) qui est parallèle à la face frontale (14) de l'élément d'écartement (12).

4. Adaptateur de guide latéral (10) selon l'une au moins des revendications précédentes ou système de guide latéral (40) selon la revendication 2 ou 3, **caractérisé en ce que** l'élément de fixation (11) est supporté avec possibilité de rotation autour d'un premier axe d'articulation (16') et/ou l'élément d'écartement (12) est supporté avec possibilité de rotation autour d'un deuxième axe d'articulation (16"), les deux axes d'articulation (16', 16") étant disposés à distance l'un de l'autre et/ou parallèlement l'un à l'autre.

5. Adaptateur de guide latéral (10) selon l'une au moins des revendications précédentes ou système de guide latéral (40) selon l'une au moins des revendications 2 à 4, **caractérisé en ce qu'**il comporte au moins un élément de liaison (17) qui présente un/l'au moins un axe d'articulation (16), en particulier les premier et deuxième axes d'articulation (16', 16"), et qui relie l'élément d'écartement (12) de façon articulée à l'élément de fixation (11).

6. Adaptateur de guide latéral (10) ou système de guide latéral (40) selon la revendication 5, **caractérisé en ce que** l'élément de liaison (17) est disposé transversalement par rapport à la face frontale (14) de l'élément d'écartement (12) et s'étend entre l'élément d'écartement (12) et l'élément de fixation (11).

7. Adaptateur de guide latéral (10) ou système de guide latéral (40) selon l'une au moins des revendications 5 ou 6, **caractérisé en ce que** l'élément d'écartement (12) présente au moins une ouverture de logement (18) dans laquelle l'élément de fixation (11) et/ou l'élément de liaison (17) peuvent être escamotés selon un mouvement pivotant.

8. Adaptateur de guide latéral (10) selon l'une au moins des revendications précédentes ou système de guide latéral (40) selon l'une au moins des revendications 2 à 7, **caractérisé en ce que** l'élément d'écartement (12) présente au moins une surface (21) avec laquelle l'élément de fixation (11) escamoté affleure au moins de niveau.

9. Adaptateur de guide latéral (10) selon l'une au moins des revendications précédentes ou système de guide latéral (40) selon l'une au moins des revendications 2 à 8, **caractérisé en ce que** l'élément d'écartement (12) et/ou l'élément de fixation (11) et/ou un/l'élément de liaison (17) est/sont en forme de plaque.

10. Adaptateur de guide latéral (10) selon l'une au moins des revendications précédentes ou système de guide latéral (40) selon l'une au moins des revendications 2 à 9, **caractérisé en ce que** le profil de maintien (15) de l'adaptateur de guide latéral (10) présente deux ergots de maintien (22) disposés l'un en face de l'autre, qui dépassent de l'élément d'écartement (12) et qui sont écartés l'un de l'autre pour recevoir l'élément de cargaison (51).

11. Adaptateur de guide latéral (10) selon l'une au moins des revendications précédentes ou système de guide latéral (40) selon l'une au moins des revendications 2 à 10, **caractérisé en ce que** l'élément de fixation (11) comporte au moins deux goujons (23) écartés l'un de l'autre pour se mettre en prise dans le tronçon de rail, au moins un des deux goujons (23) étant disposé avec possibilité de translation.

12. Système de guide latéral (40) selon l'une au moins des revendications 2 à 11, **caractérisé en ce que** le guide latéral (41) comporte au moins un élément de butée (43), de préférence plusieurs éléments de butée (43), disposés au-dessus de l'élément d'écartement (12) dans la position de montage.

13. Pont de chargement (50) muni d'au moins un adaptateur de guide latéral (10) selon l'une au moins des revendications précédentes et/ou d'au moins un système de guide latéral (40) selon l'une au moins des revendications 2 à 12.

14. Pont de chargement selon la revendication 13, **caractérisé en ce que** plusieurs adaptateurs de guide latéral (10) repliés sont disposés pour leur rangement dans un plan (commun) situé en dessous d'un plan de chargement du pont de chargement (50).

15. Procédé pour modifier un pont de chargement (50) d'un avion au moyen d'au moins un adaptateur de guide latéral (10) selon l'une au moins des revendications 1 à 12 qui comporte au moins un élément de fixation (11) et au moins un élément d'écartement (12) articulés l'un à l'autre, dans lequel l'adaptateur de guide latéral (10) est mis en place à l'aide de l'élément de fixation (11) sur un tronçon de rail, après quoi l'élément d'écartement (12) est rabattu de telle sorte que l'élément d'écartement (12) bute sur une surface de butée (42) d'un guide latéral (41) du pont de chargement (50).
